# EUROPEAN PATENT APPLICATION

(11) **EP 2 886 794 A1**
(43) Date of publication of application: **24.06.2015**
(21) Application number: 13306855.1
(22) Date of filing: 23.12.2013
(51) Int. Cl.: E21B 47/00

(54) **Systems and methods for cement evaluation calibration**

(71) Applicant: Services Pétroliers Schlumberger, 75007 Paris (FR); SCHLUMBERGER TECHNOLOGY B.V., 2514 JG Den Haag (NL); Schlumberger Holdings Limited, Tortola 1110 (VG)
(72) Inventor: Thierry, Sylvain, 92142 Clamart CEDEX (FR); Klieber, Christoph, 92142 Clamart CEDEX (FR)
(74) Representative: Ford, Michael Frederick

(57) **Abstract**

Devices and methods for calibrating acoustic cement evaluation data using an acoustic calibration device installed behind a casing in a wellbore are provided. Such an acoustic calibration apparatus may be installed in contact with the outer diameter of a casing and cemented in place with cement in a wellbore. The acoustic calibration apparatus may include a first material different from that of the casing that has first known acoustic properties (e.g., simulating a solid) and a second material different from that of the casing and the cement that has second known acoustic properties (e.g., simulating a liquid or gas). Acoustic measurements obtained by an acoustic logging tool in the wellbore may be calibrated based on the known acoustic properties of the acoustic calibration apparatus.

## Description

### BACKGROUND

This disclosure relates to evaluating cement behind a casing of a wellbore. Specifically, the embodiments described herein relate to calibrating cement evaluation data collected by acoustic downhole tools.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions.

A wellbore drilled into a geological formation may be targeted to produce oil and/or gas from certain zones of the geological formation. To prevent zones from interacting with one another via the wellbore and to prevent fluids from undesired zones entering the wellbore, the wellbore may be completed by placing a cylindrical casing into the wellbore. Cement may be injected into the annulus formed between the cylindrical casing and the geological formation. When the cement sets properly, fluids from one zone of the geological formation may not be able to pass through the wellbore to interact with one another. This desirable condition is referred to as "zonal isolation." However, the cement may not set as planned and/or the quality of the cement may be less than expected. For example, the cement may unexpectedly fail to set above a certain depth due to natural fissures in the formation.

A variety of acoustic tools, such as an ultrasonic imaging tool, may be used to verify that the cement is properly installed. These acoustic tools may use pulsed acoustic waves to obtain acoustic cement evaluation data, which may be processed to identify whether the material behind the casing is solid (likely cement) or liquid or gas (likely not cement). Processing the acoustic cement evaluation data may involve calibrating the data based on certain assumptions, such as the acoustic properties of the casing, fluids inside the casing, pressure, temperature, tool hardware electrical noises, and the acoustic properties of the cement, among other things. These assumptions may ultimately affect the absolute accuracy of the calculated acoustics properties of the material behind the casings.

One manner of calibrating the acoustic cement evaluation data is to correct for deviations from assumed values by characterizing them against a zone in the well where the material state behind the casing is known. For example, a wellbore may not be cemented to the top of the casing section, creating a zone of no cement referred to as a "free pipe zone." This zone may then be filled with a known fluid with well-known acoustic properties. For instance, if the cement displacement fluid is water, then the free pipe zone may be filled with water, as it has a known acoustic impedance of 1.5 MRayls. During data collection, the free pipe zone may be used as a calibration zone from which an offset value may be derived that is the difference between the log value of the acoustic cement evaluation data (the uncorrected, ultrasonically measured value) and the known value of the material behind the casing that the acoustic cement evaluation data should have recorded. Using the offset value, the rest of the acoustic cement evaluation data may be calibrated or "characterized" to provide a corrected acoustic well log.

There are limitations, however, to calibrating the acoustic cement evaluation data using data from a free pipe zone of the well. Indeed, relying on a free pipe zone to calibrate the acoustic cement evaluation data may involve calibrating based just on a single-point, meaning that just one material is used to determine the offset. Moreover, the conditions of the wellbore may limit whether such a calibration method can even be performed-for example, free pipe zones may not be available. Finally, the properties of the materials used may not be precisely known. In some cases, for instance, a free pipe zone may contain with water, but in other cases, a free pipe zone may contain heavy oil-based muds with intrinsic acoustic properties that vary strongly with pressure and temperature. As a result, relying on a free pipe zone to calibrate the acoustic cement evaluation data may sometimes produce an improperly characterized acoustic well log.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Embodiments of the disclosure relate to devices and methods for calibrating acoustic cement evaluation data using an acoustic calibration device installed behind a casing in a wellbore. Such an acoustic calibration apparatus may be installed in contact with the outer diameter of a casing and cemented in place with cement in a wellbore. The acoustic calibration apparatus may include a first material different from that of the casing that has first known acoustic properties (e.g., simulating a solid) and a second material different from that of the casing and the cement that has second known acoustic properties (e.g., simulating a liquid or gas). Acoustic measurements obtained by an acoustic logging tool in the wellbore may be calibrated based on the known acoustic properties of the acoustic calibration apparatus.

As such, one example of a method according to this disclosure includes placing an acoustic logging tool into a well where a casing has been installed and cemented in place. An acoustic calibration apparatus may be located behind the casing at a first depth range of the well and the acoustic calibration apparatus may include two materials of different known acoustic impedances. The acoustic logging tool may obtain acoustic measurements in the well using the acoustic logging tool. The acoustic measurements may include measurements obtained at the first depth range of the well and that are associated with the acoustic calibration apparatus. Having obtained these acoustic measurements, a processor may determine a correction to the acoustic measurements when the measurements do not substantially match expected values associated with the known acoustic impedances. The correction may cause the acoustic measurements obtained by the acoustic logging tool to substantially match the expected values.

Another method according to this disclosure includes installing casing that includes an acoustic calibration apparatus into a wellbore and cementing the casing in place. The acoustic calibration apparatus may include several materials of known acoustic properties, thereby facilitating the calibration of acoustic cement evaluation data that may be obtained by an acoustic downhole tool in the well.

Various refinements of the features noted above may be undertaken in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings in which:
FIG. 1 is a schematic diagram of a system for verifying proper cement installation and/or zonal isolation of a well, in accordance with an embodiment;
FIG. 2 is a block diagram of an acoustic downhole tool used to obtain acoustic cement evaluation data relating to material behind casing in the well, in accordance with an embodiment;
FIG. 3 is a collection of well logs produced based on the acoustic cement evaluation data gathered in the well that includes a "flag" pattern caused by multiple known acoustic impedances provided by an acoustic calibration apparatus, in accordance with an embodiment;
FIG. 4 is a perspective view of one example of the calibration apparatus when coupled to the casing, in accordance with an embodiment;
FIG. 5 is a flow chart illustrating a method for installing the calibration apparatus in the well, in accordance with an embodiment;
FIG. 6 is a top view of an example of the calibration apparatus having multiple azimuthally distributed areas of known acoustic impedance, in accordance with an embodiment;
FIG. 7 is a perspective view of an example of the calibration apparatus having multiple areas of known acoustic impedance at various depths, in accordance with an embodiment;
FIG. 8 is a flow chart illustrating a method for calibrating the acoustic cement evaluation data of the acoustic downhole tool by verifying and/or adjusting assumptive logging parameters based on measurements of the acoustic calibration apparatus, in accordance with an embodiment; and
FIG. 9 is a flow chart illustrating a method for calibrating the acoustic cement evaluation data of the acoustic downhole tool by determining one or more data offsets based on measurements of the acoustic calibration apparatus.

### DETAILED DESCRIPTION

One or more specific embodiments of the present disclosure will be described below. These described embodiments are examples of the presently disclosed techniques. Additionally, in an effort to provide a concise description of these embodiments, features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

This disclosure relates to evaluating cement installation in wells. Specifically, when a well is drilled and completed, cement may be installed behind a casing of the well. An acoustic downhole tool may collect acoustic data related to the material behind the casing, which may be processed to identify whether the material behind the casing is solid (likely cement) or is liquid or gas (likely not cement). Rather than using a single-point calibration that characterizes the acoustic cement evaluation data based on a measurement in a free pipe zone in the well, an acoustic calibration apparatus that simulates multiple known acoustic impedances may provide a multi-point calibration. The acoustic calibration apparatus may be installed in the well when the casing is installed (e.g., as a calibration blanket attached to the casing or as an integral part of the casing). Thereafter, when the acoustic downhole tool passes the acoustic calibration apparatus while logging the well, the acoustic calibration apparatus may provide multiple known acoustic impedances (e.g., solid, liquid, and gas) that can be used to calibrate the rest of the acoustic cement evaluation data that is being obtained by the acoustic downhole tool. The acoustic cement evaluation data may be calibrated (also referred to as "characterized") by computing one or more offsets and/or by determining new logging parameters in situ.

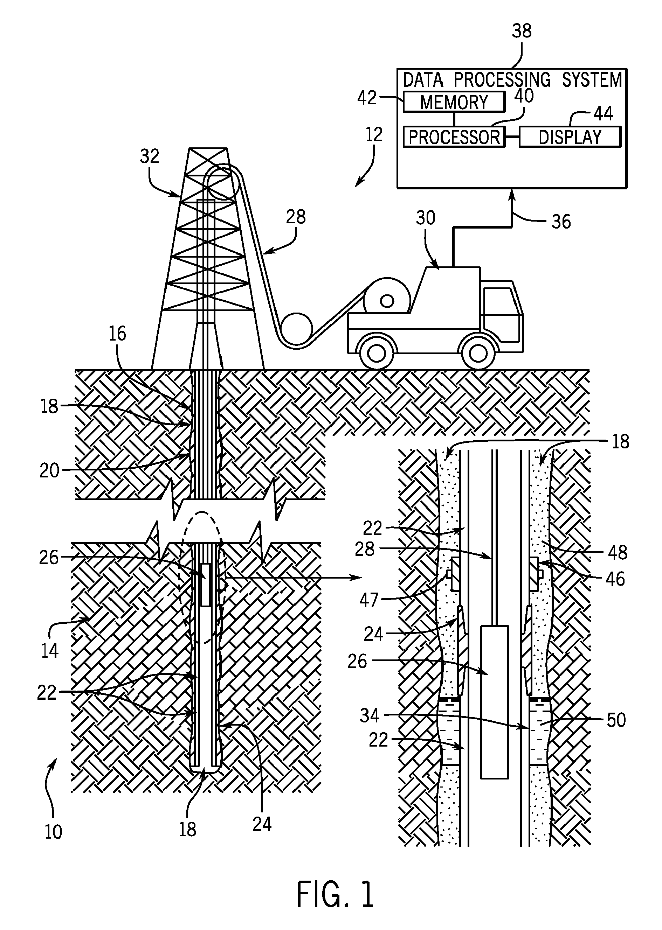

With the foregoing in mind, FIG. 1 schematically illustrates a system 10 for evaluating cement behind casing in a well. In particular, FIG. 1 illustrates surface equipment 12 above a geological formation 14. In the example of FIG. 1, a drilling operation has previously been carried out to drill a wellbore 16. In addition, an annular fill 18 (e.g., cement) has been used to seal an annulus 20-the space between the wellbore 16 and casing joints 22 and collars 24-with cementing operations.

As seen in FIG. 1, several casing joints 22 (also referred to below as casing 22) are coupled together by the casing collars 24 to stabilize the wellbore 16. The casing joints 22 represent lengths of pipe, which may be formed from steel or similar materials. In one example, the casing joints 22 each may be approximately 13 m or 40 ft long, and may include an externally threaded (male thread form) connection at each end. A corresponding internally threaded (female thread form) connection in the casing collars 24 may connect two nearby casing joints 22. Coupled in this way, the casing joints 22 may be assembled to form a casing string to a suitable length and specification for the wellbore 16. The casing joints 22 and/or collars 24 may be made of carbon steel, stainless steel, or other suitable materials to withstand a variety of forces, such as collapse, burst, and tensile failure, as well as chemically aggressive fluid.

An annular fill 18 may be then be used to seal the annulus 20, as described above. When the annular fill 18 sets, fluids from one zone of the geological formation 14 may not be able to pass through the annulus 20 of the wellbore 16 to interact with another (i.e., zonal isolation). Further, proper installation of the annular fill 18 may also ensure that the well produces from targeted zones of interest.

The system 10 may include surface equipment 12 that performs various well logging operations to detect conditions of the wellbore 16. The well logging operations may measure parameters of the geological formation 14 (e.g., resistivity or porosity) and/or the wellbore 16 (e.g., temperature, pressure, fluid type, or rate of fluid flow). Other measurements may provide acoustic cement evaluation data (e.g., flexural attenuation and/or acoustic impedance) that may be used to verify the cement installation and the zonal isolation of the wellbore 16. One or more acoustic logging tools 26 may obtain some of these measurements.

The example of FIG. 1 shows the acoustic logging tool 26 being conveyed through the wellbore 16 by a cable 28. Such a cable 28 may be a mechanical cable, an electrical cable, or an electro-optical cable that includes a fiber line protected against the harsh environment of the wellbore 16. In other examples, however, the acoustic logging tool 26 may be conveyed using any other suitable conveyance, such as coiled tubing. The acoustic logging tool 26 may be, for example, an UltraSonic Imager (USI) tool and/or an Isolation Scanner (IS) tool by Schlumberger Technology Corporation. Data collected by the acoustic logging tool 26 may be transmitted to the surface and/or stored in the acoustic logging tool for later processing and analysis.

The acoustic logging tool 26 may be deployed inside the wellbore 16 by the surface equipment 12, which may include a vehicle 30 and a deploying system such as a drilling rig 32. The surface equipment 12 may pass the measurements as acoustic cement evaluation data 36 to a data processing system 38 that includes a processor 40, memory 42, and/or a display 44. The processor 40 may be operably coupled to memory 42 to execute instructions for running the well logging operations. For example, these instructions may be encoded in programs that are stored in memory 42, which may be an example of a tangible, non-transitory computer-readable medium, and may be accessed and executed by the processor 40 to allow for the presently disclosed techniques to be performed. The memory 40 may be a mass storage device, a FLASH memory device, removable memory, or any other non-transitory computer-readable medium. Additionally and/or alternatively, the instructions may be stored in an additional suitable article of manufacture that includes at least one tangible, non-transitory computer-readable medium that at least collectively stores these instructions or routines in a manner similar to the memory 40 as described above. The data processing system 38 may also include a display 44 for an operator to view the well logging operations. The display 44 may be any suitable electronic display that can display the logs and/or other information relating to classifying the material in the annulus 20 behind the casing 22. In other embodiments, the data from the acoustic logging tool 26 may be processed by a similar data processing system at any other suitable location (e.g., in the acoustic logging tool 26 itself).

The acoustic logging tool 26 may perform any suitable measurements of acoustic impedance from ultrasonic waves and/or flexural attenuation. For instance, the acoustic logging tool 26 may obtain a pulse echo measurement that exploits the thickness mode (e.g., in the manner of an ultrasonic imaging tool) or may perform a pitch-catch measurement that exploits the flexural mode (e.g., in the manner of an imaging-behind-casing (IBC) tool). These measurements may be used as acoustic cement evaluation data 36 in a well log to identify likely locations where solid, liquid, or gas is located in the annulus 20 behind the casing 22.

In this way, the acoustic cement evaluation data 36 from the acoustic logging tool 26 may be used to determine whether cement of the annular fill 18 has been installed as expected. In some cases, the acoustic cement evaluation data 36 may indicate that the cement of the annular fill 18 has a generally solid character (e.g., as indicated at numeral 48) and therefore likely has properly set. In other cases, the acoustic cement evaluation data 36 may indicate the potential absence of cement or that the annular fill 18 has a generally liquid or gas character (e.g., as indicated at numeral 50), which may imply that the cement of the annular fill 18 likely has not properly set. For example, when the indicate the annular fill 18 has the generally liquid character as indicated at numeral 50, this may imply that the cement is either absent or was of the wrong type or consistency, and/or that fluid channels have formed in the cement of the annular fill 18. By processing the acoustic cement evaluation data 36, the data processing system 38 may ascertain a likely character of the annular fill 18. To increase the accuracy of the acoustic cement evaluation data, an acoustic calibration apparatus 46, which may be attached to the casing 22 via a coupling device 47, may simulate multiple materials of known acoustic impedance (e.g., solid, liquid, and/or gas). These areas of known acoustic impedance may provide multiple reference points by which to calibrate the remainder of the acoustic cement evaluation data obtained by the acoustic logging tool 26.

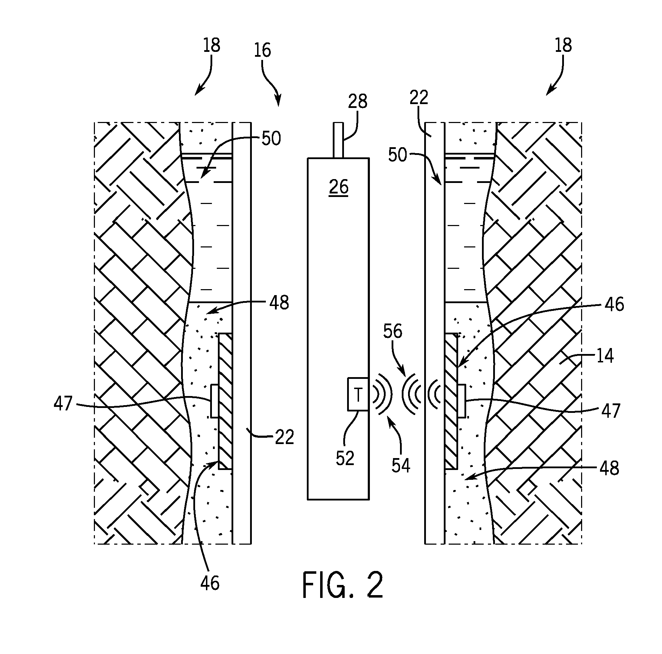

With this in mind, FIG. 2 provides a general example of the operation of the acoustic logging tool 26 in the wellbore 16. Specifically, a transducer 54 in the acoustic logging tool 26 may emit acoustic waves 54 out toward the casing 22. Reflected waves 56 correspond to acoustic interactions at the casing 22, the annular fill 18, and/or the geological formation 14 or an outer casing. At areas other than the acoustic calibration apparatus 46, the reflected waves 56 may vary depending on whether the annular fill 18 is of the generally solid character 48 or the generally liquid or gas character 50. The acoustic logging tool 26 may use any suitable number of different techniques, including measurements of acoustic impedance from ultrasonic waves and/or flexural attenuation.

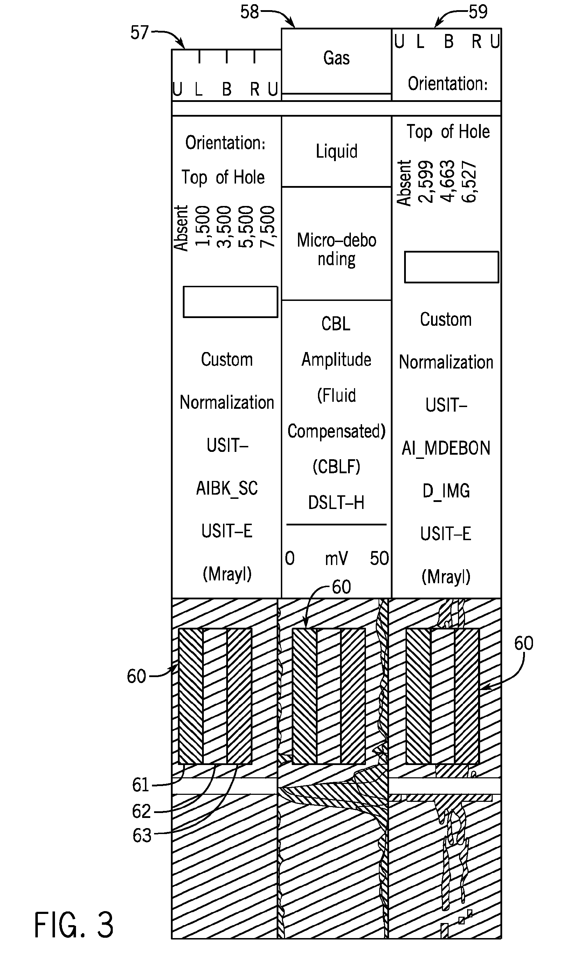

In the example of FIG. 2, the acoustic logging tool 26 is shown obtaining measurements at the acoustic calibration apparatus 46. The acoustic calibration apparatus 46 may include various areas that simulate materials of multiple known acoustic impedances (e.g., solid, liquid, and/or gas). For example, as shown by well logs 57, 58, and 59 of FIG. 3, acoustic measurements obtained at the acoustic calibration apparatus 46-even those of different modalities (e.g., ultrasonic acoustic impedance, cement bond log, and/or ultrasonic acoustic impedance considering microdebonding)-may result in a "flag" pattern 60 representing known acoustic impedance values associated with liquid 61, solid 62, and gas 63. The known acoustic impedance values of the flag pattern 60 may be used to calibrate or characterize the remainder of the acoustic impedance values to cause the acoustic cement evaluation data 36 to more accurately describe the materials throughout the wellbore 16.

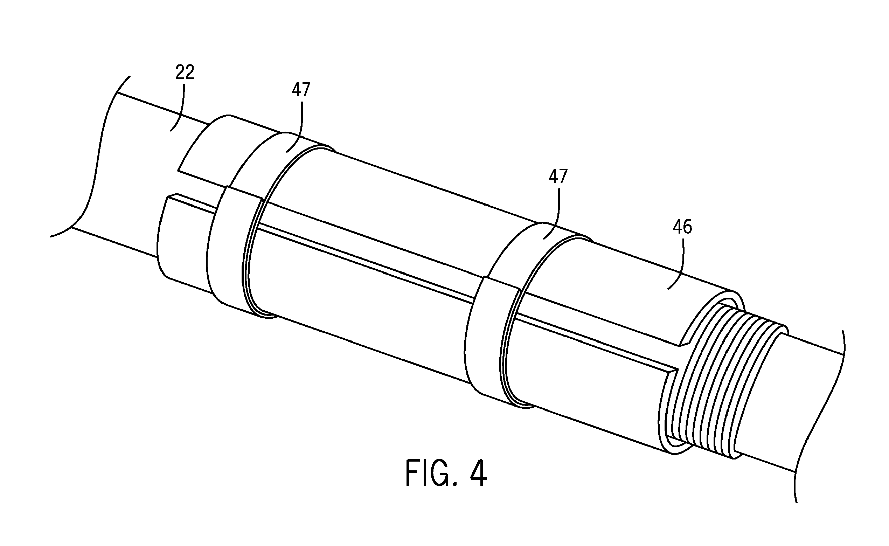

The acoustic calibration apparatus 46 may be installed on the casing 22 in the wellbore in any suitable manner. In one example, the acoustic calibration apparatus 46 may take the form of a cloth "blanket" with pockets containing various materials of different acoustic properties (as described further below), and which may attach in direct contact with the outer diameter of the casing 22 by way of a coupling device 47, as shown in FIG. 4. By remaining in direct contact with the outer diameter of the casing 22, the acoustic calibration apparatus 46 may consistently simulate materials of certain known acoustic properties (e.g., acoustic impedance). The acoustic calibration apparatus 46 and the coupling device 47 shown in FIG. 4 may have a similar construction of cloth and belting materials to those of surface-based nuclear calibration blankets used to calibrate nuclear downhole tools before the nuclear downhole tools are used to log a well. As described in this disclosure, however, the acoustic calibration apparatus 46 may not merely calibrate the acoustic logging tool 26 by being attached to the tool at the surface, as may occur with a nuclear calibration blanket. Rather, the acoustic calibration apparatus 46 may be installed onto the casing 22 and into the wellbore 16 to enable in-situ data collection and/or calibration using materials of multiple known acoustic impedances.

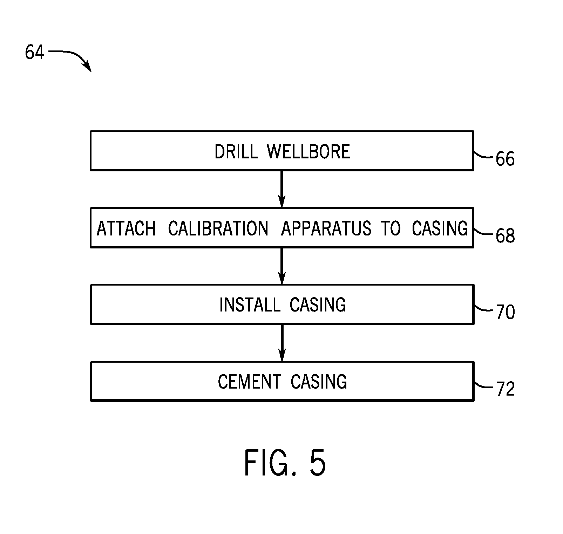

The acoustic calibration apparatus 46 may be installed, for example, in a manner described by a flow chart 64 of FIG. 5. Namely, the wellbore 16 may be drilled (block 66) and the acoustic calibration apparatus 46 may be attached to the outer diameter of the casing 22 at the surface using the coupling device 47 (block 68). The casing 22 may be installed into the wellbore 16 (block 70) before depositing the annular fill 18 (e.g., cement) into the annulus 24 between the casing 22 and the geological formation 12 (block 72). Additionally or alternatively, the acoustic calibration apparatus 46 may be integral with the casing 22. For example, certain segments of the casing 22 may have integrated areas of the casing 22 with constructed pockets that may be filled with certain materials of known acoustic impedance (e.g., solid, liquid, and/or gas) in the manner of the "blanket" example of the acoustic calibration apparatus shown in FIG. 4.

Thus, as mentioned above, the acoustic calibration apparatus 46 may be attached to the outside of the casing before installation by attaching the belting material of the coupling device 47. This coupling may reduce the complexity of installing the acoustic calibration apparatus 46. The acoustic calibration apparatus 46 may be coupled to the casing 22 in one location (e.g., near the surface) at regular intervals throughout the wellbore 16 (e.g., 750 ft). In other embodiments, the acoustic calibration apparatus 46 may be coupled to the casing 22 in locations where there is expected to be a substantial change in the conditions of the wellbore (e.g., pressure suddenly increases). Because the acoustic calibration apparatus 46 may be cemented in place, it may be field-deployable and well-behaved during casing installation, cementing, and logging phases. Additionally, if the acoustic calibration apparatus 46 is cemented in place, then the acoustic calibration apparatus 46 may be readily available to calibrate the acoustic logging tool 26 if logging operations are conducted multiple times or are conducted in the future.

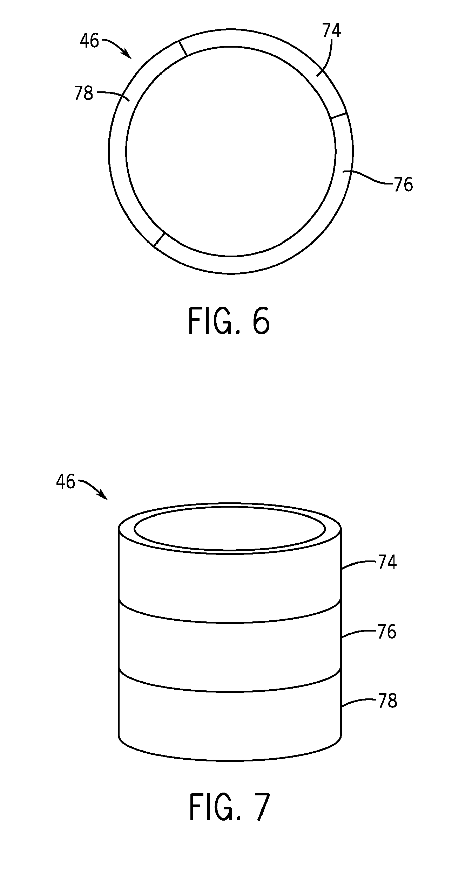

The acoustic calibration apparatus 46 may include several segments containing materials with different known acoustic properties, as shown in FIGS. 6 and 7. Having materials with well-known acoustic properties may permit the corresponding acoustic cement evaluation data 36 to be compared to the expected response to generate offset and gain corrections (e.g., parametric corrections). FIG. 6 illustrates an example of the acoustic calibration apparatus 46 with azimuthally distributed segments 74, 76, and 78, each containing a different material with known acoustic properties. FIG. 7 illustrates an example of the acoustic calibration apparatus 46 in which the segments 74, 76, and 78 are distributed by depth. In either case, because the acoustic calibration apparatus 46 includes at least two materials that have distinct acoustic impedances, corrections that may be derived from comparing the measured acoustic cement evaluation data of the acoustic calibration apparatus 46 to the known expected values of the acoustic cement evaluation data (i.e., a "multi-point" calibration) may be more accurate than if a single material were used (i.e., a "single-point" calibration). Further, the materials in the acoustic calibration apparatus 46 may be compliant such that the acoustic calibration apparatus 46 may couple to the casing 22 so as to create a micro-annulus between the acoustic calibration apparatus 46 and the casing 22. Moreover, the materials used in the acoustic calibration apparatus 46 may be well-known over a large range of wellbore environments, such as ranges of pressure and/or temperature, various types of fluids, and various types of annular fill 18.

By way of example, the acoustic calibration apparatus 46 may include a low impedance material in the segment 74, a medium impedance material in the segment 76, and a high impedance material in the segment 78. The low impedance material in the segment 74 may represent a "gas" acoustic response, and may have an acoustic impedance in the range of approximately 0-1 MRayls. Example materials of the low impedance material of the segment 74 may include a gas pocket or a "foamed" soft epoxy installed in the acoustic calibration apparatus 46, among other things. The low impedance material of the segment 74 thus may be any material that, when the acoustic calibration apparatus 46 is installed in the wellbore 16, produces a known acoustic response comparable to a gas material behind the casing 22.

The medium impedance material of the segment 76 may represent a "liquid" acoustic response and may have an acoustic impedance in the range of approximately 1-2 MRayls. Example materials of the segment 76 may include an engineered material that may simulate a liquid (e.g., Aqualene™ by Olympus, or other engineered materials) and/or an actual liquid (e.g., water) that is contained in a pocket of the acoustic calibration apparatus 46. The medium impedance material of the segment 76 thus may be any material that, when the acoustic calibration apparatus 46 is installed in the wellbore 16, produces a known acoustic response comparable to a liquid material behind the casing 22..

The high impedance material of the segment 78 may represent a "solid" acoustic response and may have an acoustic impedance in the range of approximately 2-5 MRayls. Example materials of the segment 78 may include loaded rubbers or soft epoxies, among other things. Different materials may be used to simulate different types of cement. For example, one embodiment of the acoustic calibration apparatus 46 may contain a high impedance material in the segment 78 that has a relatively lower acoustic impedance to match a relatively lighter cement. Another embodiment of the acoustic calibration apparatus 46 may contain a high impedance material in the segment 78 that has a relatively higher acoustic impedance to match a relatively heavier cement. The high impedance material of the segment 78 thus may be any material that, when the acoustic calibration apparatus 46 is installed in the wellbore 16, produces a known acoustic response comparable to a properly installed cement material behind the casing 22.

As noted above, the acoustic calibration apparatus 46 may be sectioned into materials by length, such that the material coupled to the casing 22 differs in the segments 74, 76, and 78 around the circumference of the casing 22, as shown in FIG. 6. In other embodiments, the acoustic calibration apparatus 46 may be sectioned into the segments 74, 76, and 78 based on depth, as shown in FIG. 7.

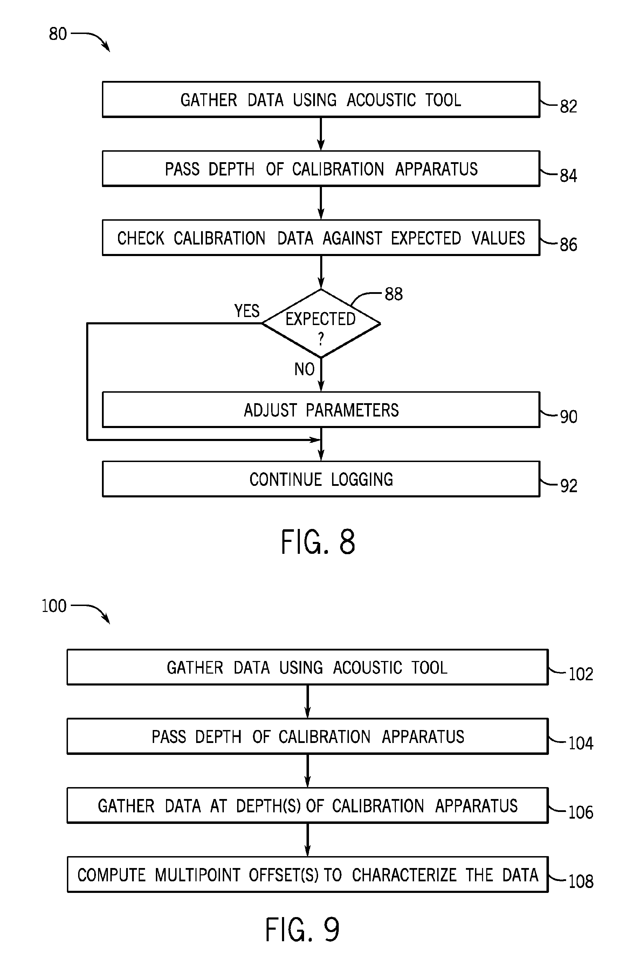

FIG. 8 depicts a method 80 for in-situ calibration of the acoustic logging tool 26 using the acoustic calibration apparatus 46. The acoustic logging tool 26 may be placed in the wellbore 16 and may begin collecting acoustic cement evaluation data 36 (block 82). The acoustic logging tool 26 may pass the depth of the acoustic calibration apparatus 46 (block 84). The depth where the acoustic calibration apparatus 46 is located may be known to the data processing system 38 (e.g., stored on the memory 42) or may be identifiable from the data corresponding to the flag pattern 60 that is obtained at this depth. Once the corresponding acoustic cement evaluation data 36 has been received, the data processing system 38 may compare the data 36 to the expected values relating to the known acoustic properties of the materials of the acoustic calibration apparatus 46 (block 86). The data processing system 38 may determine whether the acoustic cement evaluation data 36 substantially matches the expected values (decision block 88). In certain embodiments, the data processing system 38 may allow for small differences between the two sets of data; that is, the data processing system 38 may determine that if the acoustic cement evaluation data 36 is within some range (e.g., within 10%) of the expected values, the measured log values of the acoustic cement evaluation data 36 may be considered to match the known values associated with the materials of the acoustic calibration apparatus 46.

If the acoustic cement evaluation data 36 does not match the expected values (decision block 88), the data processing system 38 may determine parametric corrections and apply them to the remainder of the log (block 90) before continuing to log the well (block 92). For example, the data processing system 38 may vary the assumptive values of pressure, well fluid, and so forth, until the (corrected) acoustic cement evaluation data 36 substantially matches the expected values associated with the acoustic calibration apparatus 46. The acoustic logging tool 26 may thereafter continue logging (block 92) using the corrected logging parameters to directly obtain corrected acoustic cement evaluation data 36. Additionally or alternatively, the data processing system 38 may determine one or more offset values or functions to apply to the acoustic cement evaluation data 36 to cause the (corrected) acoustic cement evaluation data 36 substantially matches the expected values associated with the acoustic calibration apparatus 46. If the data processing system 38 determines that the acoustic cement evaluation data 36 does substantially matches the expected values (decision block 88), then the acoustic logging tool 26 may continue to log the wellbore 16 without applying additional corrections (block 92).

The acoustic logging tool 26 may also obtain acoustic cement evaluation data 36 that may be corrected in post-processing after the logging has been completed. For example, as shown by a flowchart 100 of FIG. 9, the acoustic logging tool 26 may be placed in the wellbore 16 and may begin collecting acoustic cement evaluation data 36 (block 102). The acoustic logging tool 26 may pass the depth of the acoustic calibration apparatus 46 (block 104) where the acoustic logging tool 26 may obtain acoustic cement evaluation data 36 corresponding to known acoustic properties of the acoustic calibration apparatus 46 before continuing to log the wellbore 16 (block 106). When the acoustic logging tool 26 has completed logging the wellbore 16, the data processing system 38 may receive and compute one or more multi-point offset(s) (e.g., offset values or offset functions) to cause the acoustic cement evaluation data 36 corresponding to the acoustic calibration apparatus 46 to substantially match the expected known values associated with the acoustic calibration apparatus 46 (block 108). The multi-point offset(s) may be applied to the remainder of the well log data to increase the accuracy of the resulting well logs.

The specific embodiments described above have been shown by way of example, and it should be understood that these embodiments may be susceptible to various modifications and alternative forms. It should be further understood that the claims are not intended to be limited to the particular forms disclosed, but rather to cover modifications, equivalents, and alternatives falling within the spirit and scope of this disclosure.

## Claims

1. An acoustic calibration apparatus configured to be installed in contact with an outer diameter of a casing and cemented in place with cement in a wellbore, the acoustic calibration apparatus comprising:
a first material different from that of the casing, the first material having first known acoustic properties; and
a second material different from that of the casing and the cement, the second material having second known acoustic properties different from the first known acoustic properties.

2. The acoustic calibration apparatus of claim 1, wherein:
the first known acoustic properties comprise a first acoustic impedance;
the second known acoustic properties comprise a second acoustic impedance; and
the first acoustic impedance is higher than the second acoustic impedance.

3. The acoustic calibration apparatus of claim 2, wherein:
the first acoustic impedance is between approximately 2 to 5 MRayls; and
the second acoustic impedance is between approximately 0 to 2 MRayls.

4. The acoustic calibration apparatus of claim 1, wherein:
the first known acoustic properties are configured to simulate a substantially solid material behind the casing; and
the second known acoustic properties are configured to simulate a substantially non-solid material behind the casing.

5. The acoustic calibration apparatus of claim 1, wherein the acoustic calibration apparatus comprises a substantially cylindrical shape when installed in contact with the outer diameter of the casing and wherein:
the first material is contained within a first segment of the acoustic calibration apparatus; and
the second material is contained within a second segment of the acoustic calibration apparatus;
wherein the first segment is disposed in a first azimuthal region of the acoustic calibration apparatus and the second segment is disposed in a second, non-overlapping azimuthal region of the acoustic calibration apparatus.

6. The acoustic calibration apparatus of claim 1, wherein the acoustic calibration apparatus comprises a substantially cylindrical shape when installed in contact with the outer diameter of the casing and wherein:
the first material is contained within a first segment of the acoustic calibration apparatus; and
the second material is contained within a second segment of the acoustic calibration apparatus;
wherein the first segment is disposed in a first depth range of the acoustic calibration apparatus and the second segment is disposed in a second, non-overlapping depth range of the acoustic calibration apparatus.

7. The acoustic calibration apparatus of claim 1, comprising a third material different from that of the casing, the third material having third known acoustic properties different from the first known acoustic properties and the second known acoustic properties.

8. The acoustic calibration apparatus of claim 7, wherein:
the first known acoustic properties comprise a first acoustic impedance;
the second known acoustic properties comprise a second acoustic impedance;
the third known acoustic properties comprise a third acoustic impedance;
the first acoustic impedance is higher than the second acoustic impedance and the third acoustic impedance; and
the second acoustic impedance is higher than the third acoustic impedance.

9. The acoustic calibration apparatus of claim 8, wherein:
the first acoustic impedance is between approximately 2 to 5 MRayls;
the second acoustic impedance is between approximately 1 to 2 MRayls; and
the third acoustic impedance is between approximately 0 to 1 MRayls.

10. The acoustic calibration apparatus of claim 1, wherein the first material or the second material comprises a material other than water that is configured to simulate the acoustic properties of water behind the casing.

11. The acoustic calibration apparatus of claim 10, wherein the material other than water that is configured to simulate the acoustic properties of water comprises Aqualene™.

12. The acoustic calibration apparatus of claim 1, wherein the first material or the second material comprises a foam material that is configured to simulate the acoustic properties of a gas behind the casing.

13. The acoustic calibration apparatus of claim 1, wherein the first material or the second material comprises a loaded rubber or epoxy, or both, configured to simulate the acoustic properties of a solid behind the casing.

14. A method comprising:
placing an acoustic logging tool into a well within which a casing has been installed and cemented in place, wherein a first depth range of the well comprises an acoustic calibration apparatus installed behind the casing, wherein the acoustic calibration apparatus includes a first material of a first known acoustic impedance and a second material of a second known acoustic impedance, wherein the first acoustic impedance is less than the second acoustic impedance;
obtaining acoustic measurements in the well using the acoustic logging tool, wherein the acoustic measurements include measurements obtained at the first depth range of the well that are associated with the acoustic calibration apparatus; and
using a processor to determine, when the acoustic measurements obtained by the acoustic logging tool that are associated with the acoustic calibration apparatus do not substantially match expected values associated with the known acoustic impedances of the first material and the second material, a correction that causes the acoustic measurements obtained by the acoustic logging tool to substantially match the expected values.

15. The method of claim 14, wherein the correction comprises a correction to one or more assumed logging parameters used by the acoustic logging tool.
